(19) Europäisches Patentamt European Patent Office Office européen des brevets

(11) **EP 3 674 345 B1**

(12) **EUROPEAN PATENT SPECIFICATION**

(45) Date of publication and mention of the grant of the patent:
**17.12.2025 Bulletin 2025/51**

(21) Application number: **19219648.3**

(22) Date of filing: **24.12.2019**

(51) International Patent Classification (IPC):
*C08G 69/08* (2006.01)   *C08G 69/10* (2006.01)
*C08G 69/14* (2006.01)   *C08G 69/26* (2006.01)
*C08G 69/40* (2006.01)   *C08G 69/44* (2006.01)
*C08L 77/02* (2006.01)   *C08L 77/06* (2006.01)

(52) Cooperative Patent Classification (CPC):
(C-Sets available)
C08G 69/40; C08G 69/08; C08G 69/10;
C08G 69/14; C08G 69/26; C08G 69/44;
C08L 77/02; C08L 77/06      (Cont.)

(54) **POLYAMIDE RESIN COMPOSITION AND ARTICLE COMPRISING THE SAME**

POLYAMIDHARZZUSAMMENSETZUNGEN UND ARTIKEL DAMIT

COMPOSITION DE RÉSINE DE POLYAMIDE ET ARTICLE LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2018 KR 20180173036**

(43) Date of publication of application:
**01.07.2020 Bulletin 2020/27**

(73) Proprietor: **Lotte Advanced Materials Co., Ltd. Yeosu-si, Jeollanam-do 59616 (KR)**

(72) Inventors:
• **LEE, Sang Hwa**
  **16073 Uiwang-Si, Gyeonggi-Do (KR)**
• **PARK, Ho Geun**
  **16073 Uiwang-Si, Gyeonggi-Do (KR)**
• **SEO, Yeong Deuk**
  **16073 Uiwang-Si, Gyeonggi-Do (KR)**
• **HONG, Sang Hyun**
  **16073 Uiwang-Si, Gyeonggi-Do (KR)**

(74) Representative: **Germain Maureau
12, rue Boileau
69006 Lyon (FR)**

(56) References cited:
**US-A1- 2006 030 692      US-A1- 2016 369 098**

(52) Cooperative Patent Classification (CPC): (Cont.)

C-Sets
**C08L 77/02, C08K 7/14, C08L 77/06, C08L 77/12;**
**C08L 77/06, C08K 7/14, C08L 77/02, C08L 77/12**

## Description

### Field of the Invention

The present invention relates to an electronic device housing according to the claims.

### Description of the Related Art

Polyamide resins are used in various fields, such as interior/exterior materials of electric/electronic products and automotive components, due to good properties thereof in terms of heat resistance, abrasion resistance, chemical resistance, flame retardancy. Particularly, the polyamide resins are broadly used as exterior materials for portable devices, such as mobile phones, portable computers.

In use as exterior materials, polyamide resins can be easily stained or contaminated through contact with contaminants. Although various processes such as plating or coating are used to prevent contamination of polyamide resin products, the plating or coating process increases manufacturing costs and can cause various failures.

Moreover, since polyamide resin products exhibiting good adhesion with respect to other materials can be applied to various applications including exterior materials for portable devices, there is a need for studies on improvement in adhesive strength of polyamide resins with respect to other materials.

Therefore, there is a need for development of a polyamide resin composition capable of suppressing contamination caused by various contaminants produced in daily life upon formation into products while easily securing adhesion with respect to other materials using a typical bonding agent.

The background technique of the present invention is disclosed in US Patent Publication No. 2014/0179850.

US 2016/369098 A1 refers to a use of at least one semi-crystalline polyamide in a glass-charged amorphous polyamide resin for producing a composition which is more transparent than the resin. Polyamide-based transparent composition manufactured according to the use of the semi-crystalline polyamide, including : from 5.0 to 40.0% by weight of the semi-crystalline polyamide, from 20.0 to 80.0% by weight of at least one amorphous transparent and at least partially cycloaliphatic polyamide, from 5.0 to 40.0%, preferably from 5.0% to 30.0% by weight of glass filler, and optionally: from 0.0 to 5.0% by weight of PEBA, from 0.0 to 5.0% by weight of additives, with respect to the total weight of the composition.

US 2006/030692 A1 refers to a use of a microcrystalline polyamide for obtaining an object having all or part of its outer surface formed from this microcrystalline polyamide and having a particular surface finish, in which: the manufacture of the object comprises steps carried out hot between the Tg (glass transition temperature) and the Tm (melting point) of the microcrystalline polyamide; the transparency of the microcrystalline polyamide is such that the light transmission at 560 nm on a polished object 1 mm in thickness is greater than 80%, advantageously greater than 88%, the transparency being measured on the object obtained by standard processing methods, such as injection moulding and sheet extrusion/calendaring.

### Brief Description of Drawings

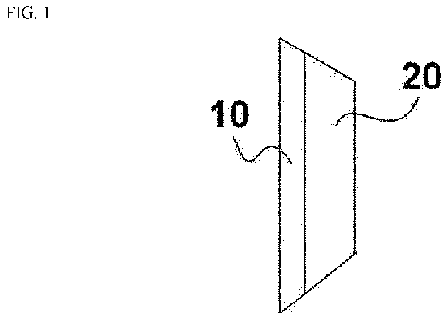

FIG. 1 is a schematic sectional view of an electronic device housing according to one embodiment of the present invention.

### Detailed Description of the Invention

Hereinafter, the present invention and embodiments thereof will be described in detail.

An electronic device housing according to the present invention comprises :

a frame and a plastic member adjoining at least one surface of the frame,
wherein the frame is glass frame or polycarbonate resin frame,
wherein the plastic member is formed from a polyamide resin composition comprising:

5 wt% to 50 wt% of an aromatic polyamide resin wherein the aromatic polyamide resin is at least one selected from the group of a polymer of an aromatic dicarboxylic acid and an aliphatic diamine and a polymer of an aliphatic dicarboxylic acid and an aromatic diamine wherein the aromatic diamine includes at least one type of phenylene diamine compounds, xylene diamine compounds or naphthalene diamine compounds;
10 wt% to 60 wt% of an aliphatic polyamide resin;
20 wt% to 60 wt% of inorganic fillers; and
0.5 wt% to 5 wt% of a polyetheresteramide block copolymer,

wherein the polyetheresteramide block copolymer is a polymer of a mixture including 5 wt% to 95 wt% of a $C_6$ to $C_{12}$ amino carboxylic acid, lactam or diamine-dicarboxylic acid salt and 5 wt% to 95 wt% of polyalkylene glycol,

wherein the polyamide resin composition has an adhesive strength (shear strength) of 850 kgf/cm$^2$ to 1,200 kgf/cm$^2$, as measured in accordance with ASTM D1002 on an injection molded specimen having a size of 100 mm $\times$ 25 mm $\times$ 2 mm and bonded to a glass specimen having the same size as the injection molded specimen to overlap each other in an area of 30 mm $\times$ 25 mm via a urethane-based bonding agent subjected to aging at 110°C, after heating a bonded portion between the specimens at 80°C for 120 seconds and aging at room temperature for 5 minutes,

wherein the polyamide resin composition has an adhesive strength (shear strength) of 950 kgf/cm$^2$ to 1,300 kgf/cm$^2$, as measured in accordance with ASTM D1002 on an injection molded specimen having a size of 100 mm $\times$ 25 mm $\times$ 2 mm and bonded to a polycarbonate resin specimen having the same size as the injection molded specimen to overlap each other in an area of 30 mm $\times$ 25 mm via a urethane-based bonding agent subjected to aging at 110°C, after heating a bonded portion between the specimens at 80°C for 120 seconds and aging at room temperature for 5 minutes.

As used herein to represent a specific numerical range, the expression "a to b" means "$\geq$ a and $\leq$ b".

(A) Aromatic polyamide resin

The aromatic polyamide resin according to the present invention serves to improve heat resistance, rigidity and impact resistance of the polyamide resin composition, and may be selected from aromatic polyamide resins for typical polyamide resin compositions.

The aromatic polyamide resin is at least one selected from the group of a polymer of an aromatic dicarboxylic acid and an aliphatic diamine; and a polymer of an aliphatic dicarboxylic acid and an aromatic diamine, as prepared by a polymerization method known in the art. For example, the polymer of the aliphatic dicarboxylic acid and the aromatic diamine may be used as the aromatic polyamide resin.

Herein, the "dicarboxylic acid" includes dicarboxylic acid, alkyl esters thereof ($C_1$ to $C_4$ lower alkyl esters, such as monomethyl, monoethyl, dimethyl, diethyl or dibutyl ester), and acid anhydrides thereof, and reacts with a diamine to form a repeat unit (dicarboxylic acid moiety) derived from the dicarboxylic acid. In addition, as used herein, the repeat unit derived from the dicarboxylic acid and a repeat unit (diamine moiety) derived from a diamine mean residues remaining after removal of a hydrogen atom (removed from an amine group), a hydroxyl group or an alkoxy group (removed from a carboxylic acid) in polymerization of the dicarboxylic acid and the diamine.

In some embodiments, the aromatic dicarboxylic acid may be selected from compounds including at least one type of $C_8$ to $C_{20}$ aromatic dicarboxylic acid, and may include, for example, terephthalic acid, isophthalic acid, 2,6-naphthalenedicarboxylic acid, 2,7-naphthalenedicarboxylic acid, 1,4-naphthalenedicarboxylic acid, 1,4-phenylenedioxyphenylenic acid, 1,3-phenylenedioxydiacetic acid, diphenic acid, 4,4'-oxybis(benzoic acid), diphenylmethane-4,4'-dicarboxylic acid, diphenylsulfone-4,4'-dicarboxylic acid, 4,4'-diphenylcarboxylic acid, and mixtures thereof. Specifically, the aromatic dicarboxylic acid may be terephthalic acid, isophthalic acid, or a mixture thereof.

In some embodiments, the aliphatic dicarboxylic acid may be a $C_6$ to $C_{20}$ linear, branched or cyclic aliphatic dicarboxylic acid, for example, adipic acid, sebacic acid, 1,4-cyclohexanedicarboxylic acid, 1,3-cyclohexanedicarboxylic acid. Specifically, the aliphatic dicarboxylic acid may be adipic acid or sebacic acid.

In some embodiments, the aromatic diamine includes at least one type of phenylene diamine compounds, such as m-phenylenediamine, p-phenylenediamine, xylene diamine compounds, such as m-xylenediamine, p-xylenediamine, naphthalene diamine compounds.

In some embodiments, the aliphatic diamine may include at least one type of $C_4$ to $C_{20}$ aliphatic diamine. For example, the aliphatic diamine may include linear or branched aliphatic diamines including 1,4-butanediamine, 1,6-hexane diamine (hexamethylene diamine: HMDA), 1,7-heptanediamine, 1,8-octanediamine, 1,10-decanediamine (decanediamine: DDA), 1,12-dodecanediamine (dodecanediamine: DDDA), 3-methyl-1,5-pentanediamine, 2,2,4-trimethyl-1,6-hexanediamine, 2,4,4-trimethyl-1,6-hexanediamine, 5-methyl-1,9-nonanediamine, 2,2-oxybis(ethylamine), bis(3-aminopropyl)ether, ethylene glycol bis(3-aminopropyl)ether (EGBA), 1,7-diamino-3,5-dioxyheptane, and mixtures thereof.

In some embodiments, the aromatic polyamide resin may include repeat units A derived from the dicarboxylic acid and repeat units B derived from the diamine in a mole ratio (diamine B/dicarboxylic acid A) of 0.95 to 1.15, for example, 1.00 to 1.10. Within this range, a polyamide resin having a suitable degree of polymerization for formation can be prepared without deterioration in properties due to unreacted monomers.

In some embodiments, the aromatic polyamide resin may have a glass transition temperature of 100°C to 150°C, for example, 120°C to 140°C, as measured by differential scanning calorimetry (DSC). Within this range, the polyamide resin composition can have good properties in terms of heat resistance, rigidity, and impact resistance.

In addition, the aromatic polyamide resin may have an intrinsic viscosity [$\eta$] of 0.7 dL/g to 1.2 dL/g, for example, 0.8 dL/g to 1.0 dL/g, as measured using an Ubbelohde viscometer at 25°C after dissolving the aromatic polyamide resin in a strong (98%) sulfuric acid solution to a concentration of 0.5 g/dL. Within this range, the polyamide resin composition can have good properties in terms of heat resistance, rigidity, and impact resistance.

The aromatic polyamide resin is present in an amount of 5 wt% to 50 wt%, for example, 10 wt% to 40 wt%, in the polyamide resin composition. In some embodiments, the polyamide resin composition can include the aromatic polyamide resin in an amount of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 wt%, based on the total weight (100 wt%) of the polyamide resin composition. Further, according to some embodiments, the aromatic polyamide resin can be present in an amount of from any of the foregoing amounts to any other of the foregoing amounts. If the content of the aromatic polyamide resin is less than 5 wt%, the polyamide resin composition can suffer from deterioration in adhesion with respect to other materials (glass, polycarbonate), antifouling properties, external appearance, and mechanical properties, and if the content thereof exceeds 50 wt%, the polyamide resin composition can suffer from deterioration in processability.

(B) Aliphatic polyamide resin

The aliphatic polyamide resin according to the present invention serves to improve impact resistance and processability of the polyamide resin composition together with the aromatic polyamide resin, and may be selected from any typical aliphatic polyamide resins known in the art.

In some embodiments, the aliphatic polyamide resin may include polyamide 6, polyamide 11, polyamide 12, polyamide 46, polyamide 66, polyamide 6,10, polyamide 6,12, polyamide 10,10, polyamide 10,12, and combinations thereof.

In some embodiments, the aliphatic polyamide resin may have a relative viscosity $[\eta_{rel}]$ of 2 to 3, for example, 2.3 to 2.8, as measured using an Ubbelohde viscometer at 25°C after dissolving the aliphatic polyamide resin in a strong (96%) sulfuric acid solution to a concentration of 0.5 g/dL. Within this range, the polyamide resin composition can have good properties in terms of processability, impact resistance.

The aliphatic polyamide resin is present in an amount of 10 wt% to 60 wt%, for example, 20 wt% to 50 wt%, in the polyamide resin composition. In some embodiments, the polyamide resin composition can include the aliphatic polyamide resin in an amount of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60 wt%, based on the total weight (100 wt%) of the polyamide resin composition. Further, according to some embodiments, the aliphatic polyamide resin can be present in an amount of from any of the foregoing amounts to any other of the foregoing amounts. If the content of the aliphatic polyamide resin is less than 10 wt%, the polyamide resin composition can suffer from deterioration in processability, antifouling properties, and adhesion with respect to other materials, and if the content thereof exceeds 60 wt%, the polyamide resin composition can suffer from deterioration in external appearance, antifouling properties.

In some embodiments, the aromatic polyamide resin and the aliphatic polyamide resin may be present in a weight ratio of 1:0.1 to 1:5, for example, 1:0.5 to 1:4, specifically 1:0.3 to 1:1. In some embodiments, the aromatic polyamide resin and the aliphatic polyamide resin may be present in a weight ratio of 1:0.1, 1:0.2, 1:0.3, 1:0.4, 1:0.5, 1:0.6, 1:0.7, 1:0.8, 1:0.9, 1:1, 1:2, 1:3, 1:4, or 1:5. Further, according to some embodiments, the aromatic polyamide resin and the aliphatic polyamide resin may be present in a weight ratio of from any of the foregoing ratios to any other of the foregoing ratios. Within this range, the polyamide resin composition can have good properties in terms of external appearance, antifouling properties, processability.

(C) Inorganic filler

In some embodiments, the inorganic fillers serve to improve mechanical properties of the polyamide resin composition, such as rigidity, and may be inorganic fillers for typical polyamide resin compositions.

In some embodiments, the inorganic fillers may include at least one selected from among glass fiber, talc, wollastonite, whisker, silica, mica, basalt fibers, and combinations thereof. Specifically, the inorganic fillers may be glass fibers.

In some embodiments, the inorganic fillers may include glass fibers having a circular cross-section having an average diameter of 5 μm to 20 μm and a pre-processed length of 2 mm to 5 mm, or glass fibers having a flake or elliptical cross-sectional shape having an aspect ratio (long diameter/short diameter in cross-section) of 1.5 to 10 and a pre-processed length of 2 mm to 5 mm, as measured using an optical microscope. Within this range, the polyamide resin composition can exhibit good properties in terms of mechanical properties and surface hardness without deterioration in other properties including external appearance.

In some embodiments, the glass fibers may have various shapes, such as fibrous, particulate, rod, needle, flake, and amorphous shapes, and may have various cross-sectional shapes, such as circular, elliptical, and rectangular cross-sectional shapes. For example, it is desirable in terms of mechanical properties that the glass fibers have circular and/or rectangular cross-sections.

The inorganic fillers (for example glass fibers) is present in an amount of 20 wt% to 60 wt%, for example, 30 to 50 wt%, in the polyamide resin composition. In some embodiments, the polyamide resin composition can include the inorganic fillers (for example glass fibers) in an amount of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60 wt%, based on the total weight (100 wt%) of the polyamide resin composition. Further, according to some embodiments, the inorganic fillers (for example glass fibers) can be present in an amount of from any of the foregoing amounts to any other of the foregoing amounts. If the content of the inorganic filler is less than 20 wt%, the polyamide resin composition can suffer from deterioration in rigidity, processability, and if the content thereof exceeds 60 wt%, the polyamide resin composition can suffer from deterioration in external appearance, antifouling properties.

(D) Polyetheresteramide block copolymer

The polyetheresteramide block copolymer according to the present invention serves to improve antifouling properties and adhesion of the polyamide resin composition with respect to other materials. The polyetheresteramide block copolymer is a polymer (block copolymer) of a mixture including 5 wt% to 95 wt%, for example, 35 wt% to 65 wt%, of a $C_6$ to $C_{12}$ amino carboxylic acid, lactam or diamine-dicarboxylic acid salt, and 5 wt% to 95 wt%, for example, 35 wt% to 65 wt%, of polyalkylene glycol. Within these ranges, the polyamide resin can secure antifouling properties and adhesion with respect to other materials.

In some embodiments, the mixture of the amino carboxylic acid, lactam, and/or diamine-dicarboxylic acid salt and the polyalkylene glycol can include the amino carboxylic acid, lactam, and/or diamine-dicarboxylic acid salt in an amount of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, or 95 wt%, based on the total weight (100 wt%) of the mixture of the amino carboxylic acid, lactam, and/or diamine-dicarboxylic acid salt and the polyalkylene glycol. Further, according to some embodiments, the amino carboxylic acid, lactam, and/or diamine-dicarboxylic acid salt can be present in an amount of from any of the foregoing amounts to any other of the foregoing amounts.

In some embodiments, the mixture of amino carboxylic acid, lactam, and/or diamine-dicarboxylic acid salt and the polyalkylene glycol can include the polyalkylene glycol in an amount of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, or 95 wt%, based on the total weight (100 wt%) of the mixture of the amino carboxylic acid, lactam, and/or diamine-dicarboxylic acid salt and the polyalkylene glycol. Further, according to some embodiments, the polyalkylene glycol can be present in an amount of from any of the foregoing amounts to any other of the foregoing amounts.

Examples of the $C_6$-$C_{12}$ amino carboxylic acid, lactam or diamine-dicarboxylic acid salt include aminocarboxylic acids, such as ω-aminocaproic acid, ω-aminoenanthic acid, ω-aminocaprylic acid, ω-aminopelargonic acid, 1,1-aminoundecanoic acid, 1,2-aminododecanoic acid; lactams, such as caprolactam, enantolactam, capryllactam, lauryllactam; and salts of diamines and dicarboxylic acids, such as salts of hexamethylenediamine-adipic acid, salts of hexamethylenediamine-isophthalic acid. For example, 1,2-aminododecanoic acid, caprolactam, and salts of hexamethylenediamine-adipic acid may be used.

In some embodiments, the polyalkylene glycol may include polyethylene glycol, polytetramethylene glycol, and combinations thereof.

In some embodiments, the polyalkylene glycol may have a weight average molecular weight (Mw) of 10,000 g/mol to 100,000 g/mol, as measured by gel permeation chromatography (GPC).

In some embodiments, the polyetheresteramide block copolymer may further include 70 parts by weight or less, for example, 35 parts by weight to 65 parts by weight, of a $C_4$ to $C_{20}$ dicarboxylic acid, relative to 100 parts by weight of the reaction mixture. In some embodiments, the polyetheresteramide block copolymer can include the $C_4$ to $C_{20}$ dicarboxylic acid in an amount of 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, or 70 parts by weight, based on 100 parts by weight of the reaction mixture of the amino carboxylic acid, lactam, and/or diamine-dicarboxylic acid salt and the polyalkylene glycol. Further, according to some embodiments, the $C_4$ to $C_{20}$ dicarboxylic acid can be present in an amount of from any of the foregoing amounts to any other of the foregoing amounts. Within this range, the polyamide resin composition can secure good antifouling properties and adhesion with respect to other materials.

Examples of the $C_4$ to $C_{20}$ dicarboxylic acid may include terephthalic acid, 1,4-cyclohexacarboxylic acid, sebacic acid, adipic acid, and dodecane carboxylic acid.

In some embodiments, a bond between the $C_6$-$C_{12}$ amino carboxylic acid, lactam or diamine-dicarboxylic acid salt and the polyalkylene glycol (polyethylene glycol and/or polytetramethylene glycol) may be an ester bond; a bond between the $C_6$ or more amino carboxylic acid, lactam or diamine-dicarboxylic acid salt and the $C_4$ to $C_{20}$ dicarboxylic acid

may be an amide bond; and a bond between the polyalkylene glycol and the $C_4$ to $C_{20}$ dicarboxylic acid may be an ester bond.

In some embodiments, the polyetheresteramide block copolymer may be prepared by a well-known method in the art, for example, by a method disclosed in JP Patent Publication No. S56-045419 or JP Unexamined Patent Publication No. S55-133424.

In some embodiments, the polyetheresteramide block copolymer may have a weight average molecular weight of 3,000 g/mol to 70,000 g/mol, for example, 20,000 g/mol to 30,000 g/mol, as measured by GPC. Within this range, the polyamide resin composition secures good antifouling properties and adhesion with respect to other materials.

The polyetheresteramide block copolymer is present in an amount of 0.5 wt% to 5 wt%, for example, 1 to 4.5 wt%, in the polyamide resin composition. In some embodiments, the polyamide resin composition can include the polyetheresteramide block copolymer in an amount of 0.5, 0.6, 0.7, 0.8, 0.9, 1, 1.5, 2, 2.5, 3, 3.5, 4, 4.5, or 5 wt%, based on the total weight (100 wt%) of the polyamide resin composition. Further, according to some embodiments, the polyetheresteramide block copolymer can be present in an amount of from any of the foregoing amounts to any other of the foregoing amounts. If the content of the polyetheresteramide block copolymer is less than 0.5 wt%, the polyamide resin composition can suffer from deterioration in antifouling properties and adhesion with respect to other materials, and if the content thereof exceeds 5 wt%, the polyamide resin composition can suffer from deterioration in external appearance and processability.

In some embodiments, a polyamide resin (A+B) including the aromatic polyamide resin (A), the aliphatic polyamide resin (B) and the polyetheresteramide block copolymer (C) may be present in a weight ratio ((A+B):(C)) of 10:1 to 70:1, for example, 12:1 to 60:1, specifically 15:1 to 35:1. Within this range, the polyamide resin composition can secure further improved properties in terms of adhesion with respect to other materials, antifouling properties, mechanical properties, external appearance, processability, and balance therebetween.

The polyamide resin composition according to one embodiment of the invention may further include typical additives, as needed, within a range not adversely affecting the effects of the present invention. Examples of the additives may include a heat stabilizer, a flame retardant, an antioxidant, a lubricant, a release agent, a nucleation agent, a colorant, and mixtures thereof, without being limited thereto. The additives may be present in an amount of 0.001 parts by weight to 40 parts by weight, for example, 0.1 parts by weight to 20 parts by weight, relative to 100 parts by weight of the polyamide resin (aromatic polyamide resin and aliphatic polyamide resin).

The polyamide resin composition according to one embodiment of the invention may be prepared in pellet form by mixing the aforementioned components, followed by melt extrusion using a typical twin-screw extruder at 270°C to 320°C, for example, 280°C to 310°C.

The polyamide resin composition has an adhesive strength (shear strength) of 850 kgf/cm$^2$ to 1,200 kgf/cm$^2$, for example, 900 kgf/cm$^2$ to 1,100 kgf/cm$^2$, as measured in accordance with ASTM D1002 on an injection molded specimen having a size of 100 mm × 25 mm × 2 mm and bonded to a glass specimen having the same size as the injection molded specimen to overlap each other in an area of 30 mm × 25 mm via a urethane-based bonding agent subjected to aging at 110°C, after heating a bonded portion between the specimens at 80°C for 120 seconds and aging at room temperature for 5 minutes.

The polyamide resin composition has an adhesive strength (shear strength) of 950 kgf/cm$^2$ to 1,300 kgf/cm$^2$, for example, 1,000 kgf/cm$^2$ to 1,200 kgf/cm$^2$, as measured in accordance with ASTM D1002 on an injection molded specimen having a size of 100 mm × 25 mm × 2 mm and bonded to a polycarbonate resin specimen having the same size as the injection molded specimen to overlap each other in an area of 30 mm × 25 mm via a urethane-based bonding agent subjected to aging at 110°C, after heating a bonded portion between the specimens at 80°C for 120 seconds and aging at room temperature for 5 minutes.

In some embodiments, the polyamide resin composition may have a brightness recovery rate of 90% or more, for example, 95% to 99%, as calculated according to Equation 1:

[Equation 1]

$$\text{Brightness recovery rate (\%)} = L_1 / L_0 \times 100$$

where $L_0$ is an initial L* (brightness) value of an injection molded specimen having a size of 50 mm × 90 mm × 2 mm, as measured by a colorimeter (MINOLTA, CM-3500d), and $L_1$ is an L* (brightness) value of the injection molded specimen, as measured by the colorimeter (MINOLTA, CM-3500d) after drawing three lines on the specimen using a black permanent pen (Monami, Namepen F) under a load of 200 g (distance between lines: 3 mm), maintaining the specimen under conditions of 50°C and 95% RH (relative humidity) for 1 hour and then under conditions of 25°C and 50% RH for 1 hour, followed by washing the surface of the specimen five times using ethanol and cloth.

An article according to the present invention is formed of the polyamide resin composition.

In some embodiments, the article is a plastic member of an electronic device housing including a glass frame and a plastic member adjoining at least one surface of the glass frame.

In some embodiments, the article is a plastic member of an electronic device housing including a polycarbonate resin frame and a plastic member adjoining at least one surface of the polycarbonate resin frame.

FIG. 1 is a schematic sectional view of an electronic device housing according to one embodiment of the present invention. It should be understood that thicknesses or widths of components in the drawing are exaggerated for convenience and the present invention is not limited thereto. Referring to FIG. 1, the electronic device housing according to the embodiment includes a glass or polycarbonate resin frame 10; and a plastic member 20 adjoining at least one surface of the glass or polycarbonate resin frame 10, wherein the plastic member is formed of the polyamide resin composition according to the present invention.

The glass or polycarbonate resin frame 10 and the plastic member 20 may have various shapes instead of being limited to particular shapes. The plastic member 20 adjoins at least one surface of the glass or polycarbonate resin frame 10. The adjoining structure may be realized by bonding or insertion and is not limited to a particular method.

In some embodiments, the glass or polycarbonate resin frame 10 may be selected from commercially available products applicable to typical electronic device housings.

In some embodiments, the plastic member 20 may be formed from the polyamide resin composition through various molding methods, such as injection molding, extrusion molding, casting. Specifically, the plastic member 20 may be an interior material of an electric/electronic device.

Next, the present invention will be described in more detail with reference to some examples. It should be understood that these examples are provided for illustration only and are not to be in any way construed as limiting the present invention.

## EXAMPLE

Details of components used in Examples and Comparative Examples are as follows.

(A) Aromatic polyamide resin

Polyamide MXD10 (Manufacturer: Arkema, Product Name: RILSAN XMFO, intrinsic viscosity [n]: 0.75 dL/g)

(B) Aliphatic polyamide resin

Polyamide 12 (Manufacturer: Evonik, Product Name: VESTAMID L)

(C) Inorganic filler

Glass fiber (Manufacturer: NITTOBO, Product Name: 3PA-820)

(D) Polyetheresteramide block copolymer

(D1) A polymer of a reaction mixture comprising 51 wt% of $C_{12}$ amino carboxylic acid and 49 wt% of polyethylene glycol (weight average molecular weight: 32,000 g/mol)
(D2) A polymer of a reaction mixture comprising 96 wt% of $C_{12}$ amino carboxylic acid and 4 wt% of polyethylene glycol (weight average molecular weight: 33,000 g/mol)
(D3) A polymer of a reaction mixture comprising 97 wt% of $C_{12}$ amino carboxylic acid and 3 wt% of polytetramethylene glycol (weight average molecular weight: 25,000 g/mol)

### Examples 1 to 8 and Comparative Examples 1 to 8

The aforementioned components were mixed in amounts as listed in Tables 1 and 2. Then, the mixture was subjected to melt-extrusion in a twin-screw extruder (L/D: 40, Φ: 45 mm) at a barrel temperature of 300°C, thereby preparing a polyamide resin composition in pellet form. The prepared pellets were dried at 100°C for 6 to 8 hours and subjected to injection molding using an injection machine under conditions of a cylinder temperature of 320°C and a mold temperature of 80°C, thereby preparing a specimen. The prepared specimen was evaluated as to the following properties. Results are shown in Tables 1 and 2.

Property evaluation

(1) Adhesive strength (shear strength), unit: kgf/cm$^2$: Adhesive strength was measured in accordance with ASTM D1002 on an injection molded specimen having a size of 100 mm × 25 mm × 2 mm and bonded to a polycarbonate resin specimen having the same size as the injection molded specimen to overlap each other in an area of 30 mm × 25 mm via a urethane-based bonding agent subjected to aging at 110°C after heating a bonded portion between the specimens at 80°C for 120 seconds and aging at room temperature for 5 minutes.

(2) Brightness recovery rate (unit: %): Brightness recovery rate was calculated according to Equation 1:

[Equation 1]

$$\text{Brightness recovery rate (\%)} = L_1 / L_0 \times 100$$

where $L_0$ is an initial L* (brightness) value of an injection molded specimen having a size of 50 mm × 90 mm × 2 mm, as measured by a colorimeter (MINOLTA, CM-3500d), and $L_1$ is an L* (brightness) value of the injection molded specimen, as measured by the colorimeter (MINOLTA, CM-3500d) after drawing three lines on the specimen using a black permanent pen (Monami, Namepen F) under a load of 200 g (distance between lines: 3 mm), maintaining the specimen under condition of 50°C and 95% RH (relative humidity) for 1 hour and then under conditions of 25°C and 50% RH for 1 hour, followed by washing the surface of the specimen five times using ethanol and cloth.

(3) Notched Izod impact strength (unit: kgf·cm/cm): Notched Izod impact strength was measured on a 1/8" thick Izod specimen in accordance with ASTM D256.

(4) Flexural modulus (unit: kgf/cm$^2$): Flexural modulus was measured on a 6.4 mm specimen at a rate of 2.8 mm/min in accordance with ASTM D790.

Table 1

| | | Example | | | | | | | |
|---|---|---|---|---|---|---|---|---|---|
| | | 1 | 2 | 3 | 4 | 5 | 6 | 7 | 8 |
| (A) (wt%) | | 20 | 15 | 30 | 40 | 20 | 30 | 30 | 40 |
| (B) (wt%) | | 45 | 50 | 30 | 20 | 40 | 30 | 30 | 10 |
| (C) (wt%) | | 33 | 33 | 37 | 39 | 36 | 39 | 36 | 46 |
| (D1) (wt%) | | 2 | 2 | 3 | 1 | 4 | 1 | 4 | 5 |
| (D2) (wt%) | | - | - | - | - | - | - | - | - |
| (D3) (wt%) | | - | - | - | - | - | - | - | - |
| Adhesive strength | Glass | 900 | 950 | 1000 | 980 | 1050 | 970 | 1080 | 1090 |
| | PC | 1020 | 1050 | 1100 | 1050 | 1100 | 1070 | 1100 | 1180 |
| Brightness recovery rate | | 96 | 97 | 96 | 97 | 96 | 96 | 97 | 94 |
| Notched Izod impact strength | | 14 | 15 | 15 | 15 | 14 | 15 | 15 | 16 |
| Flexural modulus | | 85,000 | 85,000 | 95,000 | 100,000 | 97,000 | 107,000 | 96,000 | 120,000 |

Table 2

| | Comparative Example | | | | | | | |
|---|---|---|---|---|---|---|---|---|
| | 1 | 2 | 3 | 4 | 5 | 6 | 7 | 8 |
| (A) (wt%) | - | 1 | 60 | 55 | 30 | 30 | 30 | 30 |
| (B) (wt%) | 60 | 59 | - | 5 | 30 | 30 | 30 | 30 |
| (C) (wt%) | 37 | 37 | 37 | 37 | 39.9 | 34 | 37 | 37 |
| (D1) (wt%) | 3 | 3 | 3 | 3 | 0.1 | 6 | - | - |

(continued)

| | | Comparative Example | | | | | | | |
|---|---|---|---|---|---|---|---|---|---|
| | | 1 | 2 | 3 | 4 | 5 | 6 | 7 | 8 |
| (D2) (wt%) | | - | - | - | - | - | - | 3 | - |
| (D3) (wt%) | | - | - | - | - | - | - | - | 3 |
| Adhesive strength | Glass | 450 | 440 | 500 | 920 | 310 | 970 | 290 | 210 |
| | PC | 520 | 630 | 580 | 990 | 550 | 1010 | 400 | 300 |
| Brightness recovery rate | | 71 | 73 | 65 | 72 | 91 | 83 | 94 | 93 |
| Notched Izod impact strength | | 14 | 13 | 9 | 11 | 13 | 14 | 13 | 14 |
| Flexural modulus | | 96,000 | 95,000 | 99,000 | 98,000 | 100,000 | 88,000 | 96,000 | 96,500 |

From the results, it could be seen that the polyamide resin compositions (Examples 1 to 8) according to the present invention exhibited good properties in terms of adhesion with respect to other materials (adhesive strength between glass and PC), antifouling properties (brightness recovery rate), impact resistance (notched Izod impact strength), and rigidity (flexural modulus).

Conversely, it could be seen that the resin composition of Comparative Example 1 prepared without the aromatic polyamide resin suffered from deterioration in adhesion with respect to other materials and antifouling properties; the resin composition of Comparative Example 2 prepared using a small amount of the aromatic polyamide resin suffered from deterioration in adhesion with respect to other materials and antifouling properties; the resin composition of Comparative Example 3 prepared without the aliphatic polyamide resin suffered from deterioration in adhesion with respect to other materials, antifouling properties, and impact resistance; and the resin composition of Comparative Example 4 prepared using a small amount of aliphatic polyamide resin and an excess of the aromatic polyamide resin suffered from deterioration in antifouling properties. In addition, it could be seen that the resin composition of Comparative Example 5 prepared using a small amount of the polyetheresteramide block copolymer suffered from deterioration in adhesion with respect to other materials; the resin composition of Comparative Example 6 prepared using an excess of the polyetheresteramide block copolymer suffered from deterioration in antifouling properties; the resin composition of Comparative Example 7 prepared using the polyetheresteramide block copolymer (D2) instead of the polyetheresteramide block copolymer (D1) according to the present invention suffered from deterioration in adhesion with respect to other materials; and the resin composition of Comparative Example 8 prepared using the polyetheresteramide block copolymer (D3) suffered from deterioration in adhesion with respect to other materials.

## Claims

1. An electronic device housing comprising:

a frame and a plastic member adjoining at least one surface of the frame,
wherein the frame is glass frame or polycarbonate resin frame,
wherein the plastic member is formed from a polyamide resin composition comprising:

5 wt% to 50 wt% of an aromatic polyamide resin wherein the aromatic polyamide resin is at least one selected from the group of a polymer of an aromatic dicarboxylic acid and an aliphatic diamine and a polymer of an aliphatic dicarboxylic acid and an aromatic diamine wherein the aromatic diamine includes at least one type of phenylene diamine compounds, xylene diamine compounds or naphthalene diamine compounds;
10 wt% to 60 wt% of an aliphatic polyamide resin;
20 wt% to 60 wt% of inorganic fillers; and
0.5 wt% to 5 wt% of a polyetheresteramide block copolymer,

wherein the polyetheresteramide block copolymer is a polymer of a mixture including 5 wt% to 95 wt% of a $C_6$ to $C_{12}$ amino carboxylic acid, lactam or diamine-dicarboxylic acid salt and 5 wt% to 95 wt% of polyalkylene glycol,
wherein the polyamide resin composition has an adhesive strength (shear strength) of 850 kgf/cm$^2$ to 1,200 kgf/cm$^2$, as measured in accordance with ASTM D1002 on an injection molded specimen having a size of 100 mm × 25 mm × 2 mm and bonded to a glass specimen having the same size as the injection molded specimen to overlap each other in an area of 30 mm × 25 mm via a urethane-based bonding agent subjected to aging at 110°C,

after heating a bonded portion between the specimens at 80°C for 120 seconds and aging at room temperature for 5 minutes,
wherein the polyamide resin composition has an adhesive strength (shear strength) of 950 kgf/cm$^2$ to 1,300 kgf/cm$^2$, as measured in accordance with ASTM D1002 on an injection molded specimen having a size of 100 mm × 25 mm × 2 mm and bonded to a polycarbonate resin specimen having the same size as the injection molded specimen to overlap each other in an area of 30 mm × 25 mm via a urethane-based bonding agent subjected to aging at 110°C, after heating a bonded portion between the specimens at 80°C for 120 seconds and aging at room temperature for 5 minutes.

2. The electronic device housing according to claim 1, wherein the aromatic polyamide resin is a polymer of an aliphatic dicarboxylic acid and an aromatic diamine.

3. The electronic device housing according to claim 1 or 2, wherein the aliphatic polyamide resin comprises at least one selected from the group of polyamide 6, polyamide 11, polyamide 12, polyamide 4.6, polyamide 6.6, polyamide 6.10, polyamide 6.12, polyamide 10.10, and polyamide 10.12.

4. The electronic device housing according to any one of claims 1 to 3, wherein the inorganic filler comprises at least one selected from the group of glass fiber, talc, wollastonite, whisker, silica, mica, and basalt fibers.

5. The electronic device housing according to any one of claims 1 to 4, wherein the polyetheresteramide block copolymer has a weight average molecular weight of 3,000 g/mol to 70,000 g/mol, as measured by gel permeation chromatography (GPC).

6. The electronic device housing according to any one of claims 1 to 5, wherein a weight ratio of the aromatic polyamide resin to the aliphatic polyamide resin ranges from 1:0.2 to 1:5.

7. The electronic device housing according to any one of claims 1 to 6, wherein a weight ratio of a polyamide resin comprising the aromatic polyamide resin and the aliphatic polyamide resin to the polyetheresteramide block copolymer ranges from 10:1 to 70:1.

8. The electronic device housing according to any one of claims 1 to 7, wherein the polyamide resin composition has a brightness recovery rate of 90% or more, as calculated according to Equation 1:

[Equation 1]

$$\text{Brightness recovery rate (\%)} = L_1 / L_0 \times 100$$

where $L_0$ is an initial L* value of an injection molded specimen having a size of 50 mm × 90 mm × 2 mm, as measured by a colorimeter, and $L_1$ is an L* value of the injection molded specimen, as measured by the colorimeter after drawing three lines on the specimen using a black permanent pen under a load of 200 g (distance between lines: 3 mm), maintaining the specimen under condition of 50°C and 95% RH (relative humidity) for 1 hour and then under conditions of 25°C and 50% RH for 1 hour, followed by washing the surface of the specimen five times using ethanol and cloth.

**Patentansprüche**

1. Gehäuse einer elektronischen Vorrichtung, umfassend:

einen Rahmen und ein an mindestens eine Fläche des Rahmens angrenzendes Kunststoffelement,
wobei der Rahmen ein Glasrahmen oder ein Polycarbonatharzrahmen ist,
wobei das Kunststoffelement aus einer Polyamidharzzusammensetzung gebildet ist, umfassend:

5 Gew.-% bis 50 Gew.-% eines aromatischen Polyamidharzes, wobei das aromatische Polyamidharz mindestens eines aus der Gruppe eines Polymers einer aromatischen Dicarboxylsäure und eines aliphatischen Diamins und eines Polymers einer aliphatischen Dicarboxylsäure und eines aromatischen Diamins ausgewählt ist, wobei das aromatische Diamin mindestens einen Typ von Phenylendiaminverbindungen, Xyloldiaminverbindungen oder Naphthalindiaminverbindungen enthält;

10 Gew.-% bis 60 Gew.-% eines aliphatischen Polyamidharzes;

20 Gew.-% bis 60 Gew.-% anorganischer Füllstoffe; und

0,5 Gew.-% bis 5 Gew.-% eines Polyetheresteramid-Blockcopolymers,

wobei das Polyetheresteramid-Blockcopolymer ein Polymer einer Mischung ist, die 5 Gew.-% bis 95 Gew.-% einer $C_6$- bis $C_{12}$-Aminocarbonsäure, eines Lactam- oder Diamin-Dicarbonsäure-Salzes und 5 Gew.-% bis 95 Gew.-% Polyalkylenglykol enthält,

wobei die Polyamidharzzusammensetzung eine Haftfestigkeit (Scherfestigkeit) von 850 kgf/cm² bis 1.200 kgf/cm² aufweist, gemessen gemäß ASTM D1002 an einer Spritzgussprobe, die eine Größe von 100 mm × 25 mm × 2 mm aufweist und die mit einer Glasprobe, die dieselbe Größe wie die Spritzgussprobe aufweist, so dass sie sich in einem Bereich von 30 mm × 25 mm überlappen, mittels eines Klebstoffs auf Urethanbasis verklebt und bei 110 °C gealtert wurde, nachdem ein verklebter Abschnitt zwischen den Proben bei 80 °C für 120 Sekunden erhitzt und dann bei Raumtemperatur für 5 Minuten gealtert wurde,

wobei die Polyamidharzzusammensetzung eine Haftfestigkeit (Scherfestigkeit) von 950 kgf/cm² bis 1.300 kgf/cm² aufweist, gemessen gemäß ASTM D1002 an einer Spritzgussprobe, die eine Größe von 100 mm × 25 mm × 2 mm aufweist und mit einer Polycarbonatharzprobe, die dieselbe Größe wie die Spritzgussprobe aufweist, so dass sie sich in einem Bereich von 30 mm × 25 mm überlappen, mittels eines Klebstoffs auf Urethanbasis verklebt und bei 110 °C gealtert wurde, nachdem ein verklebter Abschnitt zwischen den Proben bei 80 °C für 120 Sekunden erhitzt und dann bei Raumtemperatur für 5 Minuten gealtert wurde.

2. Gehäuse einer elektronischen Vorrichtung nach Anspruch 1, wobei das aromatische Polyamidharz ein Polymer aus einer aliphatischen Dicarbonsäure und einem aromatischen Diamin ist.

3. Gehäuse einer elektronischen Vorrichtung nach Anspruch 1 oder 2, wobei das aliphatische Polyamidharz mindestens ein ausgewähltes aus der Gruppe aus Polyamid 6, Polyamid 11, Polyamid 12, Polyamid 4.6, Polyamid 6.6, Polyamid 6.10, Polyamid 6.12, Polyamid 10.10 und Polyamid 10.12 umfasst.

4. Gehäuse einer elektronischen Vorrichtung nach einem der Ansprüche 1 bis 3, wobei der anorganische Füllstoff mindestens einen ausgewählten aus der Gruppen aus Glasfasern, Talk, Wollastonit, Haarkristallen, Siliziumdioxid, Glimmer und Basaltfasern umfassen.

5. Gehäuse einer elektronischen Vorrichtung nach einem der Ansprüche 1 bis 4, wobei das Polyetheresteramid-Blockcopolymer ein gewichtsmittleres Molekulargewicht von 3.000 g/mol bis 70.000 g/mol, wie mittels Gelpermeationschromatographie (GPC) gemessen, aufweist.

6. Gehäuse einer elektronischen Vorrichtung nach einem der Ansprüche 1 bis 5, wobei ein Gewichtsverhältnis des aromatischen Polyamidharzes zu dem aliphatischen Polyamidharz in dem Bereich von 1:0,2 bis 1:5 liegt.

7. Gehäuse einer elektronischen Vorrichtung nach einem der Ansprüche 1 bis 6, wobei ein Gewichtsverhältnis eines Polyamidharzes, das das aromatische Polyamidharz und das aliphatische Polyamidharz umfasst, zu dem Polyetheresteramid-Blockcopolymer in dem Bereich von 10:1 und 70:1 liegt.

8. Gehäuse einer elektronischen Vorrichtung nach einem der Ansprüche 1 bis 7, wobei die Polyamidharzzusammensetzung eine Helligkeitswiederherstellungsrate von 90 % oder mehr aufweist, berechnet gemäß Gleichung 1:

[Gleichung 1]

$$\text{Helligkeitswiederherstellungsrate (\%)} = L_1/L_0 \times 100,$$

wobei $L_0$ ein anfänglicher L*-Wert einer Spritzgussprobe ist, die eine Größe von 50 mm x 90 mm x 2 mm aufweist, gemessen mit einem Kolorimeter, und $L_1$ ein L*-Wert der Spritzgussprobe ist, gemessen mit dem Kolorimeter, nachdem drei Linien mit einem schwarzen Permanentmarker unter einer Belastung von 200 g auf die Probe gezeichnet wurden (Abstand zwischen den Linien: 3 mm), wobei die Probe 1 Stunde lang unter Bedingungen von 50 °C und 95 % rF (relative Luftfeuchtigkeit) und danach 1 Stunde lang unter Bedingungen von 25 °C und 50 % rF gehalten wurde, gefolgt von fünfmaligem Waschen der Oberfläche der Probe mit Ethanol und einem Tuch.

**Revendications**

1. Boîtier de dispositif électronique comprenant :

   un cadre et un élément en plastique adjacent à au moins une surface du cadre,
   dans lequel le cadre est un cadre en verre ou un cadre en résine polycarbonate,
   dans lequel l'élément en plastique est formé à partir d'une composition de résine polyamide comprenant :

   5% en poids à 50% en poids d'une résine polyamide aromatique, dans lequel la résine polyamide aromatique est au moins un choisi dans le groupe constitué par un polymère d'un acide dicarboxylique aromatique et d'une diamine aliphatique et un polymère d'un acide dicarboxylique aliphatique et d'une diamine aromatique, dans lequel la diamine aromatique comprend au moins un type de composés de phénylène diamine, de composés de xylène diamine ou de composés de naphtalène diamine ;
   10% en poids à 60% en poids d'une résine polyamide aliphatique ;
   20% en poids à 60% en poids de charges inorganiques ; et
   0,5% en poids à 5% en poids d'un copolymère séquencé polyétheresteramide,

   dans lequel le copolymère séquencé polyétheresteramide est un polymère d'un mélange comprenant 5% en poids à 95% en poids d'un sel d'acide amino carboxylique en $C_6$ à $C_{12}$, de lactame ou d'acide diamine-dicarboxylique et 5% en poids à 95% en poids de polyalkylèneglycol,
   dans lequel la composition de résine polyamide a une résistance d'adhérence (résistance au cisaillement) allant de 850 kgf/cm$^2$ à 1200 kgf/cm$^2$, telle que mesurée conformément à la norme ASTM D1002 sur un spécimen moulé par injection ayant une taille de 100 mm x 25 mm x 2 mm et lié à un spécimen de verre ayant la même taille que le spécimen moulé par injection de manière à se chevaucher dans une zone de 30 mm x 25 mm via un agent de liaison à base d'uréthane soumis à un vieillissement à 110°C, après chauffage d'une partie liée entre les spécimens à 80°C pendant 120 secondes et vieillissement à température ambiante pendant 5 minutes,
   dans lequel la composition de résine polyamide a une résistance d'adhérence (résistance au cisaillement) allant de 950 kgf/cm$^2$ à 1300 kgf/cm$^2$, telle que mesurée conformément à la norme ASTM D1002 sur un spécimen moulé par injection ayant une taille de 100 mm x 25 mm x 2 mm et lié à un spécimen de résine polycarbonate ayant la même taille que le spécimen moulé par injection de manière à se chevaucher dans une zone de 30 mm x 25 mm via un agent de liaison à base d'uréthane soumis à un vieillissement à 110°C, après chauffage d'une partie liée entre les spécimens à 80°C pendant 120 secondes et vieillissement à température ambiante pendant 5 minutes.

2. Boîtier de dispositif électronique selon la revendication 1, dans lequel la résine polyamide aromatique est un polymère d'un acide dicarboxylique aliphatique et d'une diamine aromatique.

3. Boîtier de dispositif électronique selon la revendication 1 ou 2, dans lequel la résine polyamide aliphatique comprend au moins un choisi dans le groupe constitué par le polyamide 6, le polyamide 11, le polyamide 12, le polyamide 4.6, le polyamide 6.6, le polyamide 6.10, le polyamide 6.12, le polyamide 10.10 et le polyamide 10.12.

4. Boîtier de dispositif électronique selon l'une quelconque des revendications 1 à 3, dans lequel la charge inorganique comprend au moins un choisi dans le groupe constitué par des fibres de verre, le talc, la wollastonite, la trichite, la silice, le mica et des fibres de basalte.

5. Boîtier de dispositif électronique selon l'une quelconque des revendications 1 à 4, dans lequel le copolymère séquencé polyétheresteramide a un poids moléculaire moyen en poids allant de 3000 g/mol à 70000 g/mol, tel que mesuré par chromatographie par perméation sur gel (GPC).

6. Boîtier de dispositif électronique selon l'une quelconque des revendications 1 à 5, dans lequel le rapport en poids de la résine polyamide aromatique sur la résine polyamide aliphatique se trouve dans la plage allant de 1:0,2 à 1:5.

7. Boîtier de dispositif électronique selon l'une quelconque des revendications 1 à 6, dans lequel le rapport en poids d'une résine polyamide comprenant la résine polyamide aromatique et la résine polyamide aliphatique sur le copolymère séquencé polyétheresteramide se trouve dans la plage allant de 10:1 à 70:1.

8. Boîtier de dispositif électronique selon l'une quelconque des revendications 1 à 7, dans lequel la composition de résine polyamide a un taux de récupération de luminosité supérieur ou égal à 90%, tel que calculé selon l'Équation 1 :

[Équation 1]

Taux de récupération de luminosité (%) = $L_1 / L_0 \times 100$

où $L_0$ est une valeur L* initiale d'un spécimen moulé par injection ayant une taille de 50 mm x 90 mm x 2 mm, telle que mesurée par un colorimètre, et $L_1$ est une valeur L* du spécimen moulé par injection, telle que mesurée par le colorimètre après le traçage de trois lignes sur le spécimen en utilisant un stylo permanent noir sous une charge de 200 g (distance entre les lignes : 3 mm), le maintien du spécimen dans des conditions de 50°C et 95% RH (humidité relative) pendant 1 heure, puis dans des conditions de 25°C et 50% RH pendant 1 heure, suivi du nettoyage de la surface du spécimen cinq fois en utilisant de l'éthanol et un chiffon.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140179850 A
- US 2016369098 A1
- US 2006030692 A1
- JP 56045419 A
- JP 55133424 A